# EUROPÄISCHE PATENTSCHRIFT

(11) **EP 1 097 565 B1**
(45) Veröffentlichungstag und Bekanntmachung des Hinweises auf die Patenterteilung: **27.02.2002**
(21) Anmeldenummer: 99936285.8
(22) Anmeldetag: 14.05.1999
(51) Int. Cl.: H04M 15/00, H04Q 7/20

(54) **VERFAHREN ZUR TELEKOMMUNIKATIONSNETZSEITIGEN DETEKTION DES TELEKOMMUNIKATIONSNETZSEITIGEN AUFWANDES BEZÜGLICH EINER TELEKOMMUNIKATIONSVERBINDUNG ZWISCHEN ZWEI TEILNEHMERN ZUR GEBÜHRENBERECHNUNG UND VORRICHTUNG ZUR DURCHFÜHRUNG DES VERFAHRENS**
METHOD FOR DETECTING, ON A TELECOMMUNICATION NETWORK SIDE, THE COMPLEXITY, ON THE TELECOMMUNICATION NETWORK SIDE, OF A TELECOMMUNICATION LINK BETWEEN TWO SUBSCRIBERS IN ORDER TO DETERMINE THE RATE, AND DEVICE FOR REALISING THE SAME
PROCEDE POUR DETERMINER, COTE RESEAU DE TELECOMMUNICATION, LA COMPLEXITE, COTE RESEAU DE TELECOMMUNICATION, D'UNE LIAISON DE TELECOMMUNICATION ENTRE DEUX ABONNES EN VUE DE LA TAXATION, ET DISPOSITIF POUR METTRE EN OEUVRE LEDIT PROCEDE

(30) Priorität: 14.07.1998 DE 19832713; 04.11.1998 DE 19852197
(43) Veröffentlichungstag der Anmeldung: 09.05.2001
(73) Patentinhaber: Vodafone AG, 40213 Düsseldorf (DE)
(72) Erfinder: GRAF, Florian, D-40235 Düsseldorf (DE); KEMPA, Peter, D-47877 Willich (DE); MAUSS, Oliver, D-40882 Ratingen (DE); SIEBE, Eckhard, D-40670 Meerbusch (DE); WERTHER, Thorsten, D-40470 Düsseldorf (DE)
(74) Vertreter: Meissner, Peter E., Dipl.-Ing.
(86) Internationale Anmeldenummer: DE9901506
(87) Internationale Veröffentlichungsnummer: WO0004700

(56) Entgegenhaltungen:
- EP-A- 0 462 726
- WO-A-94/28670

## Beschreibung

Die Erfindung betrifft ein Verfahren zur telekommunikationsnetzseitigen Detektion des telekommunikationsnetzseitigen Aufwandes bezüglich einer Telekommunikationsverbindung zwischen zwei Teilnehmern zur Gebührenberechnung und eine Vorrichtung zur Durchführung des Verfahrens.

Verfahren zur telekommunikationsnetzseitigen Detektion des telekommunikationsnetzseitigen Aufwandes bezüglich einer Telekommunikationsverbindung zwischen zwei Teilnehmern zur Gebührenberechnung sind im Festnetzbereich bekannt, wo für Ortsgespräche und Ferngespräche über unterschiedliche Distanzen jeweils unterschiedliche Gebühren berechnet werden.

Die Schrift EP 0462 726 offenbart ein Telekommunikationsnetz mit Verbindungen zwischen einem Festnetz-Telekommunikationsnetz und einem Mobilfunk-Telekommunikationsnetz, wobei eine Detektionseinrichtung zur Positionserfassung des Mobilfunkteilnehmers vorgesehen ist und auf Grund der Detektion des Mobilfunkteilnehmers die jeweilige Tarifberechnung für die Gesprächsverbindung erfolgt.

Aufgabe der vorliegenden Erfindung ist die Detektion des telekommunikationsnetzseitigen Aufwandes bezüglich einer Telekommunikationsverbindung zwischen einem Mobilfunkteilnehmer und einem Festnetzteilnehmer hinsichtlich der erforderlichen Fernleitungskapazitäten zur Ermöglichung einer angemessenen Gebührenberechnung. Die Aufgabe wird durch die Gegenstände der unabhängigen Ansprüche gelöst

Durch die Erfassung der Position des Mobilfunkteilnehmers und Korrelation von mit dieser Position zusammenhängenden Daten mit einem in einer Tabelle zu dieser Position vorgegebenen Ortsbereich, können erfindungsgemäß ein oder mehrere

Ortsbereiche definiert werden, die de facto mit der Position des Mobilfunkgerätes dieses umgebend mitwandern. Da bei einer Telekommunikationsverbindung eines Mobilfunkteilnehmers mit einem sich in dessen Nähe befindlichen Festnetzteilnehmer keine Telekommunikations-Fernleitungen erforderlich sind, erlaubt die erfindungsgemäße Detektion einer derartigen Konstellation eine aufwandsbezogene Gebührenberechnung. Dies ist von Bedeutung, da beispielsweise bei einem Ferngespräch von einem Mobilfunkteilnehmer mit einer aktuellen Position in München zu einem Festnetzteilnehmer mit einer aktuellen Position in Hamburg aufgrund der erforderlichen Fern-Telekommunikationsleitung von München nach Hamburg ein erheblich höherer telekommunikationsnetzseitiger Aufwand entsteht als beispielsweise bei einem Anruf eines Mobilfunkteilnehmers mit einer aktuellen Position in Hamburg bei einem Festnetzteilnehmer in Hamburg. Dabei kann der Mobilfunkteilnehmer Anrufer und der Festnetzteilnehmer Angerufener sein. Der zu detektierende Aufwand im Sinne der Ansprüche ist also insbesondere eine erforderliche oder nicht erforderliche Telefonleitung aus einem Ortsbereich hinaus und ggf. erforderliche oder nicht erforderliche Netzschaltzentren (MSCs, GMSCs etc.).

Vorzugsweise wird im Falle der Detektion eines Ortsgespräches der Anrufer hierüber informiert. Dazu kann er entweder mit einem Sprachansagesystem verbunden werden oder es kann von einem Kurznachrichtensystem eine Kurznachricht an den Anrufer gesendet werden.

Ein Ferngespräch im Sinne der Anmeldung kann jedes Gespräch sein, das nicht in den die Position des Mobilfunkteilnehmers umgebenden Ortsbereich geht. Ein Ferngespräch kann also ein Ferngespräch in unterschiedliche Tarifzonen des Festnetzbereichs oder ein Auslandsgespräch sein. Die Telekommunikationsverbindung gemäß Anspruch 1 ist insbesondere eine Sprach- oder Faxverbindung.

Die Detektion, ob ein Festnetzanschluß innerhalb eines die Position des Mobilfunkteilnehmers umgebenden, vorgebbaren Ortsbereichs liegt, erfolgt zweckmäßig in Komponenten des Telekommunikationsnetzes. Hierzu ist eine Tabelle von Mobilfunkteilnehmer-Positions-Ortsbereichen und jeweils zugeordneten FestnetzVorwahlen geeignet. Mobilfunkteilnehmer-Postions-Ortsbereiche können beispielsweise jeweils mit Bezug auf Mobilfunknetz-Elemente, insbesondere Mobilfunk-Basisstationen oder Funkzellen abgelegt sein. Die Position eines Mobilfunkteilnehmers kann beispielsweise aufgrund der Funkzelle oder der Basisstation, über welche er kommuniziert, detektiert werden und einem Mobilfunk-Teilnehmer-Ortsbereich zugeordnet werden. Die Feststellung, ob die Vorwahl des Festnetzteilnehmers bezüglich der detektierten Position des Mobilfunkteilnehmers im durch die Tabelle definierten Ortsbereich liegt, kann durch Vergleich der Festnetzteilnehmer-Vorwahl mit allen Vorwahlen in der Tabelle zu der Basisstation, Funkzelle etc., in welcher sich der Mobilfunkteilnehmer aktuell befindet, detektiert werden.

Grundsätzlich ist die Detektion, ob ein Ortsgespräch oder Ferngespräch vorliegt, in einem Mobilfunk-Telekommunikationsnetz ebenso wie in einem Festnetz-Telekommunikationsnetz möglich.

Hinsichtlich der Vorrichtung ist die Erfindung in einem Telekommunikationsnetz gemäß Anspruch 19 realisierbar.

Weitere Merkmale und Vorteile der Erfindung ergeben sich aus der nachfolgenden Beschreibung eines Ausführungsbeispiels anhand der Zeichnung. Dabei zeigt
- Fig. 1: schematisch zwei Mobiltelefone und sie umgebende Ortsbereiche,
- Fig. 2: schematisch telekommunikationsnetzseitige Vorgänge bei der Information eines Teilnehmers über das Vorliegen eines Ortsgesprächs oder Ferngesprächs,
- Fig. 3: wesentliche Teile des Signalflusses,
- Fig. 4: beispielhaft einen Auszug aus einer Tabelle mit Funkzellen (location number) und einer Funkzelle zugeordneten Ortsbereichs-Vorwahlnummern,
- Fig. 5: schematisch einige Funkzellen und jeweils für die Funkzellen geltende Orts-Vorwahlbereiche,
- Fig. 6: einen Ausschnitt eines Mobilfunknetzes,
- Fig. 7: eine Tabelle von Gemeinden, Vorwahlen und Besiedlungsdaten,
- Fig. 8: eine Tabelle von Ortsgesprächs-Vorwahlen einer beispielhaften Funkzelle,
- Fig. 9: eine mögliche Anzeige von Ortsgesprächs-Vorwahlen auf einem Mobilfunkgerät.

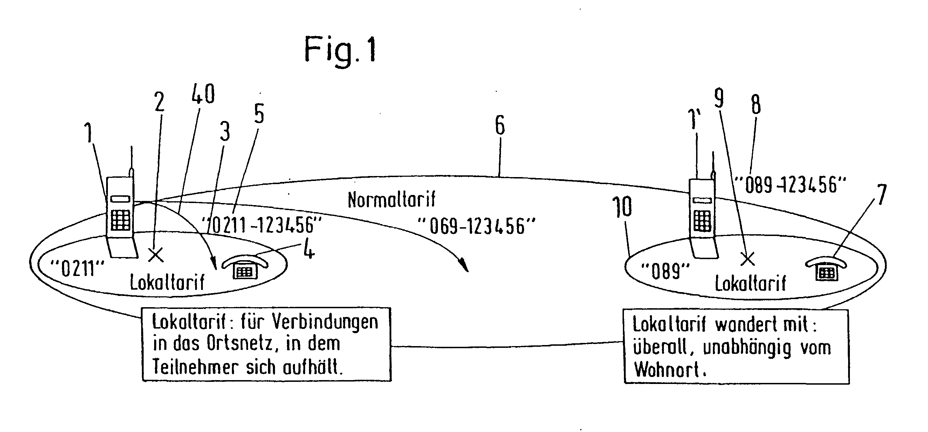

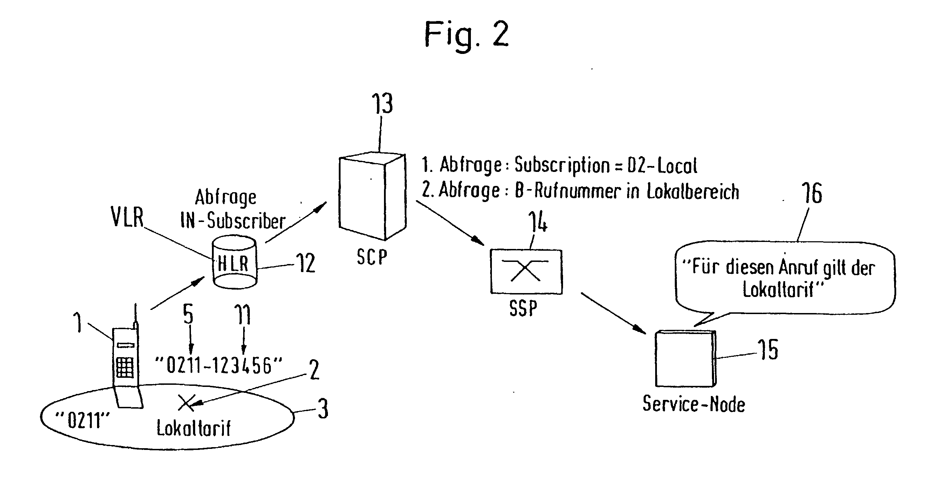

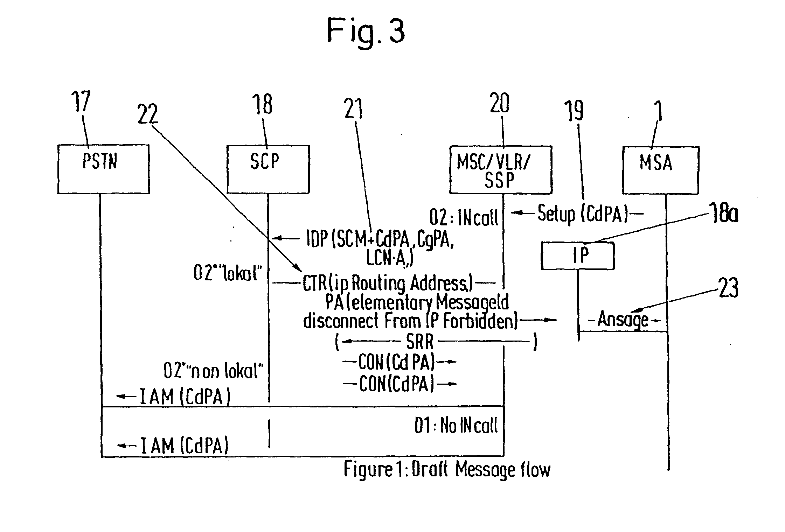

Figur 1 zeigt einen Mobilfunk-Teilnehmer 1 in Form eines Mobilfunkgerätes (= Handy) an einer Position 2, wobei in einem die Position 2 umgebenden vorgegebenen Ortsbereich 3 für Ortsgespräche zwischen dem Mobilfunkteilnehmer 1 mit der Position 2 und einem Festnetzteilnehmer 4 mit einer Vorwahl 5 (mit der Ziffernfolge 0211) ein Ortsgespräch detektiert und vergebührt wird, während zu einer Telekommunikationsverbindung 6 zwischen dem Mobilfunkteilnehmer 1 und einem Festnetzteilnehmer 7 mit der Vorwahl 8 (Ziffernfolge 089) ein höherer Aufwand aufgrund der Fernleitung 6 für das Ferngespräch detektiert und ein Ferngespräch vergebührt wird. Der Mobilfunkteilnehmer 1 kann somit in einen mit seiner aktuellen Mobilfunkteilnehmer-Position 2 mitwandernden, die Position umgebenden Ortsbereich 3 Ortsgespräche und mit Festnetzteilnehmern außerhalb dieses Bereichs Ferngespräche führen.

Wenn sich der Mobilfunkteilnehmer 1 anstelle der in Figur 1 links dargestellten Position 2 an der in Figur 1 rechts zum Mobilfunkteilnehmer 1' dargestellten Position 9 befindet, ist sein Ortsbereich der die aktuelle Position 9 umgebende Ortsbereich 10.

Figur 2 zeigt ebenfalls den Mobilfunkteilnehmer 1 mit dem ihn umgebenden Ortsbereich 3, in welchem (wie in Figur 1) nur eine Vorwahl 5 (nämlich die Ziffernfolge 0211) als Ortsgespräch (zum Lokaltarif) anwählbar ist, während außerhalb des Ortsbereiches 3 um die aktuelle Mobilfunkteilnehmer-Position 2 lediglich Ferngespräche führbar sind. Bei einem Anruf des Mobilfunkteilnehmers 1 bei einer Telefonnummer 5, 11 (Ziffernfolge 0211-123456) wird eine Anfrage des Mobilfunkteilnehmers 1 (der Subscriber des intelligenten erfindungsgemäßen Telekommunikationsnetzes ist) an einen Dienststeuerungspunkt (SCP = Service Control Point) 13 weiterübermittelt. Vom SCP 13 wird an einen Dienstevermittlungspunkt (SSP = Service Switching Point) 14 eine Abfrage übermittelt, ob der Mobilfunkteilnehmer 1 zur Telefonie im seine Position umgebenden Ortsbereich zu einem billigeren Tarif (Ortsgespräche) als normale Gespräche (= Ferngespräche) berechtigt ist, also ob er beispielsweise diesen Dienst subscribiert hat sowie eine Anfrage, ob die vom Mobilfunkteilnehmer 1 angerufene Telefonnummer 5, 11 (Ziffernfolge 0211-1234356) im Ortsbereich um die aktuelle Position 2 des Mobilfunkteilnehmers liegt. Im Service-Knoten 15 wird aufgrund einer Tabelle anhand der Mobilfunkteilnehmer-1-Position 2 festgestellt, ob die angewählte Vorwahl 5 (hier Ziffernfolge 0211) im Ortsbereich um die Position 2 liegt oder nicht. Dazu kann die Position 2 des Mobilfunkteilnehmers 1 insbesondere in Form von Elemente des Mobilfunk-Telekommunikationsnetzes repräsentierender Darstellung, insbesondere in Form der Bezeichnung einer Funkzelle, einer Basisstation, einer Location Number etc., übermittelt werden. Der Dienstknoten 15 (= Service-Node) stellt hier fest, daß die angerufene Vorwahl 5 (Ziffernfolge 0211) im Ortsbereich 3 um die Position 2 des Mobilfunkteilnehmers 1 liegt. Deshalb wird im Dienstknoten 15 hier die Nachricht 16 generiert: "Für diesen Anruf gilt der Lokaltarif" (= Ortsgespräch). Diese Nachricht 16 kann in unterschiedlicher Weise dem Mobilfunkteilnehmer 1 kommuniziert werden. Beispielsweise kann eine Telefon-Vollverbindung (in Abgrenzung zu einer Kurznachricht, also eine Fullrate, Halfrate-etc.-Verbindung) zwischen dem Mobilfunkteilnehmer 1 und dem Dienstknoten 15 hergestellt werden und die Nachricht 16 als Sprachnachricht an den Mobilfunkteilnehmer 1 übermittelt werden. Auch ist es möglich, die Nachricht 16 vom Dienstknoten 15 an den Teilnehmer 1 per Kurznachricht (beispielsweise GSM-SMS oder USSD) zu übermitteln. Hierdurch kann der Mobilfunkteilnehmer 1 zuverlässig darüber informiert werden, welcher telekommunikationsnetzseitige Aufwand durch seinen Anruf entsteht, also ob ihm ein Ortsgespräch oder ein Ferngespräch für die Telekommunikationsverbindung berechnet wird.

Figur 3 zeigt wesentliche Teile der Signafisierung zwischen einem öffentlichen Telefonnetz PSTN, also einem Festnetz 17, einem Dienstesteuerungspunkt SCP 18, einer Gruppe 20 von Mobilfunknetz-Elementen (MSC = Mobilvermittlungseinrichtung, VLR = Besucherdatei oder Besucher-Positionsdatei, SSP = Dienstevermittlungspunkt), einem intelligenten Peripheriegerät 18a (IP = intelligent peripheral, z. B. im Dienstknoten 15) und einem MS-A 1 (= Mobilfunkteilnehmer 1). Figur 3 zeigt insbesondere eine Setup-Signalisierung 19 vom Mobilfunkteilnehmer 1 zu Mobilfunknetz-Elementen 20, die Nachfrage 21 der Elemente 20 beim SCP 18, ob es sich um einen lokalen Anruf (= Ortsgespräch) handelt, die Antwort 22 des SCP 18, ob es sich um ein Ortsgespräch handelt an das intelligente Peripheriegerät 18a, die Kurznachricht 23 des intelligenten Peripheriegeräts 18a an die Mobilstation MS-A (= 1) sowie die Standardnachricht CON (CDPA). Für den Fall, daß es sich um kein Ortsgespräch handelt (non local) wird ebenfalls die Nachricht CON (CdPA) übermittelt. Ferner zeigt Figur 3 die Standardnachrichten IAM (CdPA).

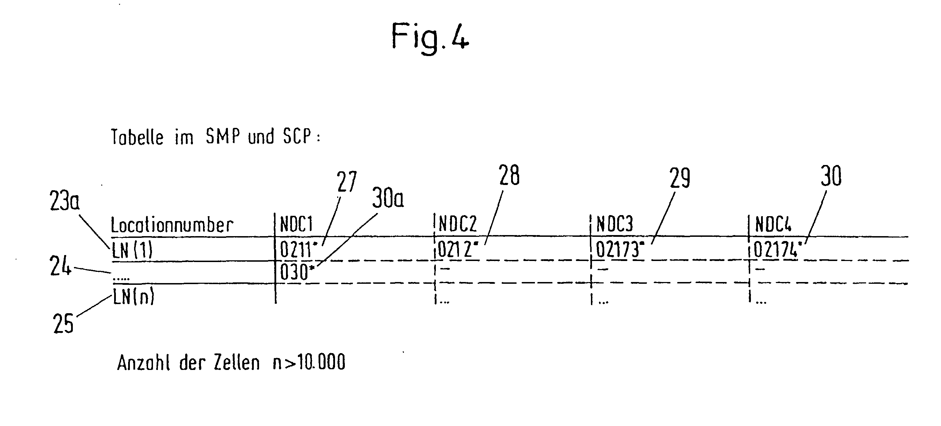

Figur 4 verdeutlicht die Detektion, ob es sich um ein Ortsgespräch oder Ferngespräch handelt anhand einer Tabelle mit mögliche Positionen 2 repräsentierenden Location Numbers 23 a bis 25 und diesen Location Numbers jeweils zugeordneten Ortsbereichs-Vorwahlen 0211 (26), 0212 (27), 02173 (28), 02174 (29). Für das Beispiel der Location Number 24 ist hier beispielsweise nur eine Vorwahl 030 (30) angegeben, zu welcher als einzige Ortsgespräche geführt werden können. Die Location Number 23 a bis 25 kann insbesondere eine Funkzelle, eine Basisstation, eine Gruppe von Funkzellen, eine Gruppe von Basisstationen etc. repräsentieren. Beispielsweise kann eine Location Number alle Funkzellen oder Basisstationen innerhalb einer Stadt repräsentieren. Auch kann eine Location Number den Bereich repräsentieren, welcher die aktuelle Position 2 des Mobilfunkteilnehmers 1 enthält und die Grenzen eines Ortsbereiches eines Festnetz-Anbieters repräsentiert. Die Tabelle gemäß Figur 4 kann in unterschiedlicher Weise erstellt werden. Vorteilhaft für die Erstellung der Tabelle ist es, wenn von einem Festnetzbetreiber, mit welchem der Mobilkommunikationsnetzbetreiber regelmäßig Verbindungen erstellt, eine Datei vorliegt, in welcher Vorwahlen und Ortsbereiche mit Bezug zueinander angegeben sind. Die Zuordnung der Zellflächen zu Vorwahlgebieten erfolgt indirekt über einerseits die Zuordnung von Zellflächen zu Location Numbers und andererseits über die Zuordnung von Locaction Numbers zu Vorwahlgebieten. Vorteilhaft ist insbesondere ein Attribut zu einer Vorwahl, welches angibt, ob der Vorwahlbereich ("besiedelt" oder "nicht besiedelt) ist. Insbesondere kann für die Erstellung eines Ortsbereiches die Stellenzahl der Vorwahl berücksichtigt werden. Es können eine bestimmte Anzahl der ersten Ziffern der Vorwahl berücksichtigt werden. Die Anzahl der signifikantenen Ziffern kann vorwahlabhängig konfiguriert werden.

Die Position eines Mobilfunkteilnehmers kann insbesondere bezüglich Funkzellen des Mobilfunknetzes erfaßt und gespeichert werden. Eine Position 2 kann beispielsweise in Form der Funkzelle, in welcher sie sich befindet, angegeben werden. Zur Definition des örtlichen Bereiches, welche durch eine Funkzelle angegeben ist, kann beispielsweise ein die Funkzelle definierender Polygonzug ermittelt werden, welcher beispielsweise durch die Mittelsenkrechten der Verbindungslinien jeweils der Basisstation der Funkzelle und räumlich benachbarter Basisstationen gebildet wird. Gegebenenfalls kann in Richtung der Hauptstrahlrichtung des Senders des zu definierenden Funkzellen-Polygons eine Verschiebung in Richtung der Hauptstrahlrichtung durchgeführt werden, beispielsweise nur einige Meter oder eine Sekunde etc. Hierauf liegen die möglichen Positionen in Form von Polygonflächen, welche jeweils eine Funkzelle repräsentieren, vor.

Um nun eine Position eines Mobilfunkteilnehmers (in Form der Funkzelle, über welche er gerade telefoniert) und einen vom Mobilfunkteilnehmer angerufenen Vorwahlbereich vergleichen zu können, wird hier für jede Funkzelle (Location Number in Figur 4) eine Liste von für diese als Ortsbereich erreichbaren Vorwahlen 27 bis 30 generiert.

Die Zuordnung der Vorwahlbereiche erfolgt zweckmäßig aufgrund einer Datei eines Festnetzbetreibers, in welcher Datei zu einer Vorwahlnummer jeweils alle im Vorwahlbereich enthaltenen Flächenelemente geographisch angegeben sind. Die Bewertung kann dabei im Rastermaß 25 x 25 m erfolgen. Falls in der Datei des Festnetzbetreibers Flächenelemente dahingehend charakterisiert sind, ob sie besiedelt oder nicht besiedelt sind, ist es zweckmäßig, nur die "besiedelten" Flächenelemente zu betrachten, da nur in diesen mit einer nennenswerten Zahl von Gesprächen mit einem Festnetzteilnehmer zu rechnen ist.

Die Auswahl der einer Location Number 23 a zugeordneten Vorwahlbereiche 27, 28, 29, 30 kann insbesondere aufgrund folgender Kriterien erfolgen, wobei jeweils die Polygonfläche einer Funkzelle (mit einer Location Number) betrachtet wird:
a) Liegt die betrachtete Polygonfläche der betrachteten Funkzelle (mit der Location Number 25) in keinem Vorwahlbereich, d.h. wird von der Polygonfläche kein einziges Flächenelement mit dem Attribut "besiedelt" überdeckt, so wird diese Polygonfläche demjenigen Vorwahlbereich zugeordnet, in dem die zugehörige Location Number liegt (die Attribute "besiedelt" oder "nicht besiedelt" werden in diesem Falle nicht berücksichtigt).
b) Liegt die betrachtete Polygonfläche nur in einem einzigen Vorwahlbereich 30, d.h. werden von dieser Polygonfläche nur besiedelte Flächenelemente eines einzigen Vorwahlbereichs überdeckt, so wird nur dieser eine Vorwahlbereich zugeordnet.
c) Liegt die betrachtete Polygonfläche in zwei Vorwahlbereichen, d.h. werden von dieser Polygonfläche nur besiedelte Flächenelemente von zwei Vorwahlbereichen überdeckt, so werden diese zwei Vorwahlbereiche zugeordnet.
d) Liegt die betrachtete Polygonfläche in drei Vorwahlbereichen, d.h. werden von dieser Polygonfläche nur besiedelte Flächenelemente von drei Vorwahlbereichen überdeckt, so werden diese drei Vorwahlbereichen zugeordnet.
e) Liegt die betrachtete Polygonfläche in vier Vorwahlbereiche, d.h. werden von dieser Polygonfläche nur besiedelte Flächenelemente von vier Vorwahlbereichen überdeckt, so werden diese vier Vorwahlbereichen zugeordnet.
f) Liegt die betrachtete Polygonfläche in mehr als vier Vorwahlbereichen, d.h. werden von dieser Polygonfläche besiedelte Flächenelemente von mehr als vier Vorwahlbereichen überdeckt, so werden diejenigen vier Vorwahlbereiche zugeordnet, von denen die absolut meisten besiedelten Flächenelemente erfaßt wurden.

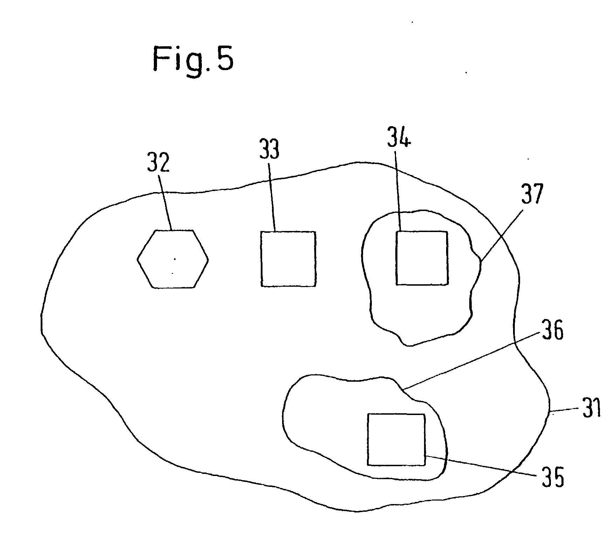

Figur 5 zeigt in einem Ausschnitt 31 eines Telekommunikationsnetzes mehrere Funkzellen 32, 33, 34, 35 mit zur Vereinfachung polygon dargestellter Form.

In der Funkzelle 35 befindet sich beispielsweise innerhalb des gesamten Abdeckungsbereiches der Funkzelle 35 nur ein Teilgebiet der Stadt Düsseldorf 36 (mit der Vorwahl 0211). Damit kann innerhalb der Funkzelle 35 zum Vorwahlbereich der Stadt Düsseldorf 36 (0211) im Ortsbereich telefoniert werden, nicht jedoch zu Teilgebieten der Stadt Münster (37).

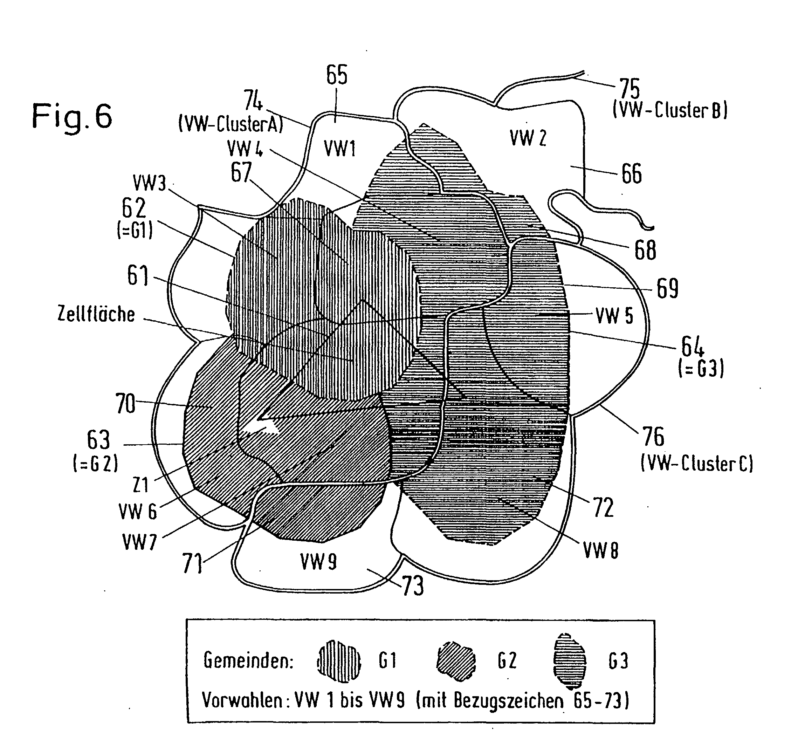

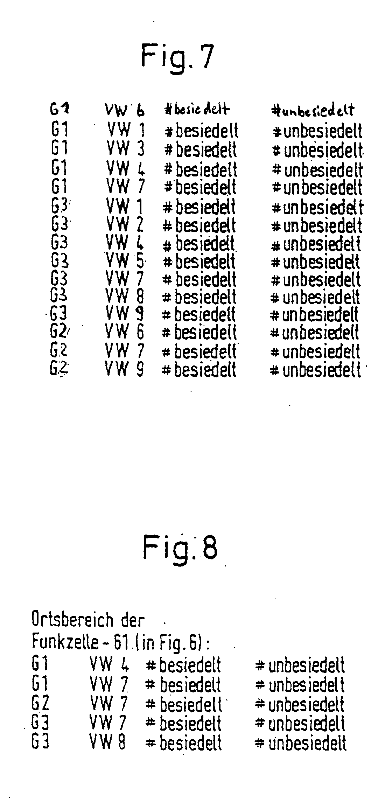

Figuren 6 bis 9 zeigen ein Ausführungsbeispiel für die Zuordnung von Vorwahl-Clustern (= Gruppen von Vorwahlen) zu Gemeinden und von Gemeinden zu Funkzellen. Dabei wird grundsätzlich bei einem Anruf eines Anrufers 1 bei einem Angerufenen 7 ein Ortsgespräch detektiert und berechnet, wenn die Vorwahl des Angerufenen 7 in einem Vorwahl-Cluster enthalten ist, der einer derjenigen Gemeinden zugeordnet ist, in welche diejenige Funkzelle strahlt, in welche der anrufende Telekommunikations-Teilnehmer 1 im Augenblick (in für Mobilfunksysteme üblicher Weise) eingebucht ist.

Figur 6 zeigt beispielhaft einen kleinen Ausschnitt aus einem Mobilfunknetz, beispielsweise einem GSM-Mobilfunknetz. Dabei sind einer Basisstation 60 mehrere Funkzellen zugeordnet. Die von einer dieser Funkzellen abgedeckte Zellfläche (= Funkzellenfläche) 61 ist als Dreieck dargestellt; innerhalb dieses dargestellten Dreiecks 61 soll ein Empfang von für diese Funkzelle 61 ausgestrahlten Sendungen für Mobilstationen möglich sein.

Figur 6 zeigt ferner schraffiert dargestellte Gemeinden, wobei die in den nachfolgenden Tabellen als G1 bezeichnete erste Gemeinde hier das Bezugszeichen 62, die Gemeinde G2 das Bezugszeichen 63 und die Gemeinde G3 das Bezugszeichen 64 aufweist. Die räumlichen Flächen, welche von Gemeinden abgedeckt sind, können entweder mit einzelnen Vorwahlen oder mit Vorwahl-Clustern (= mehreren verschiedenen Vorwahlen) übereinstimmen. Einzelne Vorwahlen können dabei auch mehreren Gemeinden zugeordnet sein. In Figur 6 sind beispielhaft die Vorwahlen VW1 bis VW9 mit den Bezugszeichen 65 bis 73 dargestellt. Femer sind drei Vorwahl-Cluster, nämlich das Vorwahl-Cluster A (Bezugszeichen 74), das Vorwahl-Cluster B (Bezugszeichen 75) und das Vorwahl-Cluster C (Bezugszeichen 76) dargestellt. Zur Vereinfachung wurden für die Vorwahlgebiete (VW1 bis VW9 mit den Bezugszeichen 65 bis 73), die Gemeinden G1, G2, G3 (mit den Bezugszeichen 62 bis 64) und die Vorwahl-Cluster A, B, C (Bezugszeichen 74 bis 76) Begrenzungslinien unterschiedlicherStrichstärken verwendet, nämlich für die Vorwahl-Cluster (jeweils umfassend eine oder mehrere Vorwahlen) eine dickere Strichstärke, für die Vorwahlgebiete eine durchgehende dünnere Strichstärke (bzw. dort, wo die Vorwahlgebiete-Grenzen auch Vorwahlklasse-Grenzen sind, die dicke Strichstärke der Vorwahl-Cluster) sowie für die Gemeinden eine dünne Strichstärke in gestrichelter Form. Überdies wurden die drei Gemeinden schraffiert dargestellt.
Um nun festzustellen, ob von der aktuellen Funkzelle (mit der Funkzellen-Fläche 61, dreieckigen Figur 6) ein Ortsgespräch zu einem Teilnehmer in einem der Vorwahlgebiete VW1 bis VW9 (Bezugszeichen 65 bis 73) geführt werden kann, wird wie nachfolgend verfahren:

Es wird von folgenden vorliegenden Basisdaten ausgegangen:
- Gemeinde-Informationen betreffend die geographische Fläche der Gemeinde, den Gemeindenamen und eine Gemeindekennziffer,
- Ortsnetz-Informationen betreffend geographische Flächen der Ortsnetze, Ortsnetznamen und Ortsnetzvorwahlen,
- Besiedlungsdaten betreffend pixelweise geographische Informationen über besiedelte und unbesiedelte Gebiete,
- Koordinaten von Basisstationen
- Hauptabstrahlrichtungen von Funkzellen (= Azimuth) und ggf. dem Typ der Zelle, welcher beispielsweise davon abhängen kann, ob die Zelle auf dem Land oder in der Stadt (beispielsweise Piko-Zelle) ist, ob die Zelle keulenförmig ausgebildet ist etc.

Zur Vorbereitung werden zunächst die zu Gemeinden vorliegende Informationen betreffend deren geographische Flächen mit den Ortsnetz-Informationen betreffend geographische Flächen der Ortsnetze und damit der Ortsnetz-Vorwahlen und die Besiedlungsdaten betreffend Besiedlung oder Nichtbesiedlung (= unbesiedelt) von Gebieten in eine geographische Rasterkarte in Form einer mehrspaltigen Datei etc. eingebracht, in der zu jedem Punkt (= Pixel) mit konstantem oder unterschiedlichem Pixeldurchmesser) folgende Informationen abgelegt werden:
- ist dieser Punkt (= Pixel) besiedelt oder unbesiedelt
- in welchem Vorwahlgebiet (VW1 bis VW9 etc. in Figur 6) liegt der Punkt
- in welcher Gemeinde (G1 bis G3 in Figur 6) liegt der Punkt.
   Hierauf werden zu jeder Gemeinde (G1, G2, G3 in Figur 6) alle Vorwahlen bestimmt, die an irgendeinem Pixel innerhalb der Gemeinde gültig sind. Ferner wird für jedes Vorwahlgebiet einer Gemeinde (also den Teil eines Vorwahlgebietes VW1, das sich in der Gemeinde G1 befindet etc.) jeweils die Summe der besiedelten und der unbesiedelten Pixel als Zahl (alternativ als Prozentzahl für diesen Vorwahl-Teilbereich dieser Gemeinde) abgelegt.

Figur 7 zeigt eine Tabelle, welche für den beispielhaften Ausschnitt eines Mobilfunknetzes gemäß Figur 6 gewählt werden könnte. Dabei sind in der ersten senkrechten Spalte die Gemeinden G1 bis G3 aufgeführt, in der zweiten Spalte Vorwahlen (VW1 bis VW9), soweit sie für die jeweilige Gemeinde (G1 bis G3) existieren, sowie jeweils die Anzahl der besiedelten Pixel und der unbesiedelten Pixel in diesem Vorwahlgebiet (z.B. VW1) dieser Gemeinde (z.B. G1).

Beispielsweise ist in der ersten Zeile in Figur 7 für die Gemeinde 1 und deren Teilbereich, für den die Vorwahl VW1 gilt, die Zahl der besiedelten und unbesiedelten Pixel abgelegt. In der zweiten Zeile in Figur 7 ist für den Teil der Gemeinde 1, für den die Vorwahl VW3 (z.B. 0211 etc.) gilt wiederum die Zahl der hierin enthaltenen (also in G1 und VW3 enthaltenen) besiedelten und unbesiedelten Pixel enthalten. Für die Gemeinde G1 sind die Vorwahl-Teilgebiete VW1, VW3, VW4, VW6, VW7 abgelegt, da sich gemäß Fig. 6 lediglich diese Vorwahlgebiete mit der Gemeindefläche G1 zumindest teilweise überschneiden. Für die Gemeinde G2 sind die Vorwahlgebiete VW1, VW2, VW4, VW5, VW7, VW8 abgelegt. Für die Gemeinde G3 sind die Vorwahlgebiete VW3, VW6, VW7, VW9 jeweils mit Besiedlungsdaten abgelegt.

In einem weiteren (hiervor, hiernach oder parallel zu erfolgendem) Schritt, werden für die Zellflächen (beispielsweise Zellfläche 61 in Figur 6 für eine bestimmte Funkzelle) der Funkzellen (zweckmäßig für alle Funkzellen) die geographischen Flächen bestimmt, die jeweils von einer Funkzelle versorgt werden. Beispielsweise kann die Berechnung der Flächen näherungsweise auf Basis der Voronoi-Fläche (Thiessen-Polygone) einer Basisstation erfolgen. Innerhalb der Voronoi-Fläche einer Basisstation kann die Aufteilung auf die Funkzellen über die Winkelhalbierenden der Hauptabstrahlrichtung der Funkzellen erfolgen (beispielsweise in den Zellflächengrenzen zwischen benachbarten Zellen jeweils als Mitte der Hauptstrahlrichtungen dieser benachbarten Zellen). Damit ergibt sich beispielsweise eine Zellfläche 61 einer Funkzelle gemäß Bezugszeichen 61 in Figur 6.

Für die derart (oder alternativ in anderer Weise) bestimmten Zellflächen der Funkzellen des Mobilfunknetzes wird nun jeweils für eine Funkzellenfläche festgestellt, wieviele besiedelte und unbesiedelte Pixel in dieser Funkzelle existieren, indem innerhalb des geographischen Begrenzungsbereiches der Funkzelle alle besiedelten ebenso wie alle unbesiedelten Pixel addiert werden. Diese Funkzellen-Daten betreffend die Besiedelung einzelner Funkzellen können zur weiteren Differenzierung des Ortsbereiches verwendet werden. Beispielsweise ergäbe sich für die Funkzelle mit dreieckiger Form und dem Bezugszeichen 61 in Figur 6 die Tabelle gemäß Figur 8. Eine Differenzierung ist beispielsweise dahingehend vorstellbar, daß der Vorwahl-Bereich, der von einer Funkzelle aus gewählt werden kann, auch von den Besiedlungsinformationen bezüglich dieser Funkzelle gemäß Figur 8 abhängig gemacht wird.

Im nächsten Schritt werden die Vorwahlen zusammengefaßt zu Vorwahlgruppen (= Vorwahl-Clustern). Beispielsweise können die Vorwahlen zusammengefaßt werden, deren führende vier Stellen identisch sind (z..B. 0210, 02102, 02103 etc.) Dabei könnten für ein Cluster von Vorwahlen Vorwahlen mit vierstelliger, fünfstelliger oder mehr als fünfstelliger Länge zusammengefaßt werden.

Im Beispiel in Figur 6 sind (durch dicke Linien) die geographischen Grenzen von drei Vorwahl-Clustern A, B, C (Bezugszeichen 74, 75, 76) dargestellt.

Im nächsten Schritt werden die Vorwahl-Cluster den Funkzellen des Mobilfunknetzes zugeordnet. Hierzu werden jeder Zelle des Mobilfunknetzes z.B. alle Vorwahl-Cluster zugeordnet, die innerhalb einer Gemeinde liegen, die von der Zellfläche (61) dieser jeweiligen Funkzelle geschnitten (also zumindest teilweise überdeckt) werden. Somit kann von einer Zelle aus zum Ortstarif als Ortsgespräch zu denjenigen Teilnehmern (Festnetzteilnehmern) telefoniert werden, die in einem Vorwahlgebiet liegen, welches in einem der Vorwahl-Cluster liegt, welches der jeweiligen Funkzelle (aus welcher der Teilnehmer zum Ortstarif telefonieren möchte) zugeordnet ist. Im vorliegenden Beispiel könnte derart der Teilnehmer, welcher in einer Funkzelle mit der Zellfläche 61 in Figur 6 eingebucht ist, innerhalb der Vorwahl-Cluster A, B, C telefonieren. Auch ist es möglich, bei der Zuordnung von Vorwahl-Clustern zu jeweils einer Funkzelle nur diejenigen Vorwahl-Cluster zu verwenden, innerhalb derer Gemeinden liegen, deren Schnittmenge mit der jeweiligen Funkzelle einen Schwellwert überschreitet. Derart könnte beispielsweise das Vorwahl-Clustergebiet C (Bezugszeichen 76) in Figur 6 auch aus der Liste derjenigen Vorwahl-Cluster-Gebiete mit Orttarif gestrichen werden. Ebenfalls ist es möglich, nur Vorwahlen zu berücksichtigen für ein Vorwahl-Cluster, deren Anteil an besiedelten Flächen einen vorgebbaren Schwellwert überschreitet.

Die Information, zu welchen Vorwahlen aktuell ein Ortsgespräch möglich ist (also zum Ortstarif) kann an alle eingebuchten Mobilstationen innerhalb der Zellfläche einer Mobilfunkzelle beispielsweise per Cell-Broadcast -Kurznachricht (CB-SMS) gesendet werden. Dies ist beispielsweise in GSM- oder anderen Mobilfunknetzen möglich; in anderen Mobilfunknetzen können ggf. andere Rundspruchmöglichkeiten verwendet werden. Die Information, wohin ein Ortsgespräch möglich ist, wird also in einer Zelle an alle dort befindlichen Teilnehmer ausgestrahlt. Dabei kann die Ausstrahlung der CB-SMS oder sonstige Rundspruchnachricht mit Paramtern erfolgen, welche auf dem Display eine unmittelbare Anzeige veranlassen. Hierzu kann beispielsweise eine Datensequenz in einem Datensatz verwendet werden, welcher eine Ausgabe auf dem Display veranlaßt, wie beispielsweise Anweisungen an das MMI-Inferface (men machine interface) einer Moblfunkkarte. Auch könnte ein SIM-Application-Tool-Kit einer SIM-Karte angesprochen werden. Insbesondere könnte ein die Darstellung auf einem Display veranlassender Datensatz im TDPU-Rahmen einer dazu gesendeten CB-SMS verwendet werden.

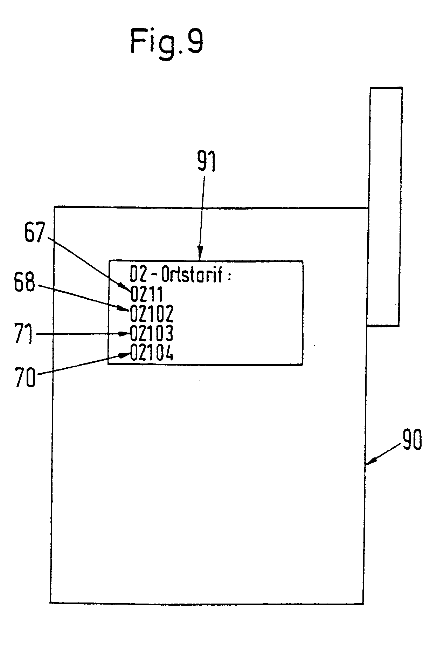

Gemäß Figur 9 kann beispielsweise in einem Mobilfunkgerät (= SM) aufgrund einer dort empfangenen CB-SMS auf dem Display 91 des Mobilfunkgerätes die Information gemäß Figur 9 auf dem Display dargestellt werden. Auf dem in Figur 9 gezeigten Display 91 ist der Text "D2-Ortstarif: /0211/02102/02103/02104" is dargestellt. Dieser gesamte auf dem Display darzustellende Text kann beispielsweise als Textsequenz in einer CB-SMS neben einer Anweisung, diese Textsequenz auf dem Display darzustellen, enthalten sein.

Die Reihenfolge, in welcher auf dem Display (91 in Figur 9) die Vorwahlen dargestellt werden, zu welchen ein Telefonieren als Ortsgespräch in der aktuell belegten Funkzelle (61) des Mobilfunkgerätes (90) möglich ist, kann beispielsweise in einer Reihenfolge erfolgen, welche die Summe der besiedelten Pixel für jede Vorwahl (also die Summe der besiedelten Pixel für 0211, für 02102, für 02103 in Figur 9) berücksichtigt. Derart werden große Städte vor kleineren Städten vor Dörfern hinsichtlich der Reihenfolge dargestellt.

Die Gebührenberechnung im Mobilfunknetz (beispielsweise in einer MSC, von welcher aus die Gebühren für einzelne Gespräche jeweils an eine zentrale Stelle zur Akkumulation bezüglich einzelner Teilnehmer weitergeleitet werden) erfolgt derart, daß für Ortsgespräche Ortsgesprächs-Gebühren berechnet werden, für andere Gespräch die sonst jeweils geltenden Gebühren. Hierfür ist also eine Entscheidungseinheit im Mobilfunknetz (beispielsweise in den HLR oder VLR oder MSCs oder BSCs) vorgesehen, welche entscheidet, ob für ein geführtes Gespräch eines Teilnehmers ein Ortstarif zu berechnen ist oder ein üblicher anderer Tarif zu berechnen ist. Für diese Entscheidung wird die im soeben geführten und zu berechnenden Gespräch verwendete Vorwahl (z.B. 0211) von dieser Entscheidungseinheit daraufhin geprüft, ob zu dieser Vorwahl von der aktuellen Funkzelle des Teilnehmers während dieses Gespräches ein Ortsgespräch möglich ist. Hierfür wird von dieser Entscheidungseinheit auf eine Datei mit Ortsgespräche aus dieser Funkzelle ermöglichenden Vorwahlen zugegriffen. Diese Datei kann sich bei jeder gebührenberechnenden Stelle (z.B. MSC, BSC oder zentral für teilnehmerakkumulierende Stellen im Mobilfunknetz) befinden und dort abgefragt werden.

## Patentansprüche

1. Verfahren zur telekommunikationsnetzseitigen Detektion des telekommunikationsnetzseitigen Aufwandes bezüglich einer gewünschten oder bestehenden Telekommunikationsverbindung (6) zwischen zwei Teilnehmern (1, 7) zur Gebührenberechnung,
wobei ein Teilnehmer ein Mobilfunkteilnehmer (1) mit einem Mobilfunkgerät und der andere Teilnehmer ein Festnetzteilnehmer (7) mit einem Festnetzanschluß ist und
wobei die Position (2; Funkzelle 23 a) des Mobilfunkteilnehmers (1) erfaßt wird, **dadurch gekennzeichnet,**
**dass** im Falle einer Telekommunikations-Verbindung (40) des Mobilfunkteilnehmers (1) mit einem Festnetzteilnehmer (4), dessen Festnetzanschluß aufgrund der Festnetzanschluß-Vorwahl innerhalb eines die Position (2; Funkzelle 23 a) des Mobilfunkteilnehmers (1) umgebenden, vorgebbaren Ortsbereichs (3) liegt, ein Ortsgespräch detektiert wird,
während im Falle einer Telekommunikations-Verbindung (6) des Mobilfunkteilnehmers (1) mit einem Festnetzteilnehmer (7), dessen (4) Festnetzanschluß aufgrund seiner Festnetzanschluß-Vorwahl außerhalb des die Position (Funkzelle 23 a) des Mobilfunkteilnehmers (1) umgebenden, vorgebbaren Ortsbereichs liegt, ein verglichen mit dem Ortsgespräch teureres Ferngespräch detektiert wird.

2. Verfahren nach Anspruch 1,
**dadurch gekennzeichnet,**
**daß** der Mobilfunkteilnehmer (1) Anrufer und der Festnetzteilnehmer Angerufener ist

3. Verfahren nach einem der vorhergehenden Ansprüche,
**dadurch gekennzeichnet,**
**daß** im Falle der Detektion eines Ferngesprächs (6) und/oder im Falle der Detektion eines Ortsgespräches (40) der Anrufer (1) hierüber informiert wird.

4. Verfahren nach Anspruch 3,
**dadurch gekennzeichnet,**
**daß** der Anrufer zu seiner Information auf ein Sprachansagesystem geschaltet wird, welches die Art des Gesprächs (Ferngespräch/Ortsgespräch) repräsentierende Informationen in Sprachform ansagt.

5. Verfahren nach Anspruch 3 oder 4,
**dadurch gekennzeichnet,**
**daß** zur Information von einem Kurznachrichtensystem (Fig. 2, 15) die Art des Gesprächs repräsentierende Informationen als Kurznachricht oder unstructured supplementary service data, USSD, dem Anrufer (1) gesendet werden.

6. Verfahren nach einem der vorhergehenden Ansprüche,
**dadurch gekennzeichnet,**
**daß** die Detektion, ob die Festnetzvorwahl (5 = "0211") bezüglich der detektierten aktuellen Postition (23 a) des Mobilfunkteilnehmers (1) im Ortsgesprächsbereich (3) oder im Ferngesprächsbereich (10) liegt aufgrund einer Tabelle von Mobilfunkteilnehmer-Postionsbereichen (23 a,24,25) und zugeordneten Festnetzvorwahlen (27,28,29,30; 30; -) erfolgt.

7. Verfahren nach Anspruch 6,
**dadurch gekennzeichnet,**
**daß** dabei die Mobilfunkteilnehmerpositions-Bereiche (23 a bis 25) in der Tabelle (Fig. 4) in Form von jeweils einen Mobilfunkteilnehmer-Postitionsbereich abdeckenden Mobilfunknetz-Elementen, insbesondere Mobilfunk-Basisstationen oder Funkzellen (23 a bis 25), abgelegt sind.

8. Verfahren nach einem der Ansprüche 6 oder 7,
**dadurch gekennzeichnet,**
**daß** die Mobilfunkteilnehmer-Positions-Bereiche (23 a, 24, 25) aufgrund von Polygonflächen gebildet sind, wobei zumindest näherungsweise die einzelne Polygonseiten jeweils durch die Mittelsenkrechten der Verbindungslinien jeweils der Basisstation der Funk zelle und raümlich benachbarter Basisstationen gebildet werden.

9. Verfahren nach Anspruch 8;
**dadurch gekennzeichnet,**
**daß** die Polygonseiten aufgrund der Hauptstrahlrichtung des Senders der Polygon-Funkzelle gegenüber der Mittelsenkrechten verschoben sind.

10. Verfahren nach einem der Ansprüche 6 bis 9,
**dadurch gekennzeichnet,**
**daß** in der Tabelle, die zu einer Basisstation oder deren Polygonfläche oder Funkzelle gehörenden Ortsbereichs-Vorwahlen aufgrund ihrer Vorwahlen-Ziffern (27; 0211) definiert sind.

11. Verfahren nach einem der Ansprüche 6 bis 10,
**dadurch gekennzeichnet,**
**daß** für einen möglichen Mobiltelefon-Positions-Bereich (23 a,24,25) nur diejenigen Vorwahlen berücksichtigt sind, in deren Abdeckungsbereich hinreichende Besiedlung vorliegt.

12. Verfahren nach einem der vorhergehenden Ansprüche,
**dadurch gekennzeichnet,**
**daß** jeweils ein Vorwahlbereich (Figur 6/VW1; VW3; VW4; VW7 für G1) als im Ortsbereich (74, 75 und 76) um die aktuelle Position (in 61) des Mobilfunkteilnehmers (90) enthalten definiert wird, falls dieser Vorwahlbereich (VW1, 3, 4, 7, 65 - 73) in einer Gemeinde (G1 - G3, 62 - 64) liegt, in welche Gemeinde hinein zumindest teilbereichsweise von der vom Mobilfunkteilnehmer (90) benutzten Funkzelle (61) aus empfangbar gesendet wird.

13. Verfahren nach Anspruch 12,
**dadurch gekennzeichnet,**
**daß** ein Vorwahlbereich nur dann als zum Ortsbereich gehörig definiert wird, falls die Überschneidungsfläche des Vorwahlbereichs mit einer Gemeinde, in welche die vom Mobilfunkteilnehmer benutzte Funkzelle hinein sendet, über einem Schwellwert liegt.

14. Verfahren nach einem der Ansprüche 12 oder 13,
**dadurch gekennzeichnet,**
**daß** ein Vorwahlgebiet nur als zum Ortsbereich gehörig definiert wird, falls der Anteil der besiedelten Flächenelemente des Vorwahlgebietes (VW1) über einem vorgebbaren Schwellwert liegt.

15. Verfahren nach einem der vorhergehenden Ansprüche,
**dadurch gekennzeichnet,**
**daß** über eine Funkzelle jeweils die Funkzellenfläche, in welche diese Funkzelle empfangbar sendet, näherungsweise durch Bestimmung der Basisstationsfläche in Form der Voronoi-Fläche der dieser Funkzelle zugeordneten Basisstation und Aufteilung der Basisstations-Fläche auf die Funkzellen dieser Basisstation über die Winkelhalbierenden der Hauptabstrahlrichtungen der Funkzellen dieser Basisstation berechnet wird.

16. Verfahren nach Anspruch 15,
**dadurch gekennzeichnet,**
**daß** die Flächengrenzen zwischen benachbarten Funkzellen jeweils als Mitte ihrer Hauptabstrahlungsrichtungs-Winkelhalbierenden definiert werden.

17. Verfahren nach einem der vorhergehenden Ansprüche,
**dadurch gekennzeichnet,**
**daß** für jeden Vorwahlbereich (VW1 bis VW9), zu dem ein Mobilfunkteilnehmer (90; 1) zum Ortstarif telefonieren kann, alle besiedelten Flächenelemente aller von dieser Vorwahl erreichbaren Gemeinden addiert werden und die Vorwahlen nach der Summe ihrer besiedelten Pixel sortiert an das Endgerät (90) eines Mobilfunktelekommunikationsteilnehmers 1 zur dortigen Darstellung (91) in dieser Reihenfolge gesandt werden.

18. Verfahren nach einem der vorhergehenden Ansprüche,
**dadurch gekennzeichnet,**
**daß** an alle Teilnehmer innerhalb mindestens einer Funkzelle mittels eines Cell-Broadcast oder einer sonstigen Rundspruchnachricht Informationen darüber gesendet werden, zu welchen Vorwahlen Ortsgespräche möglich sind.

19. Telekommunikationsnetz, zum Durchführen des Verfahrens nach einem der vorhergehenden Ansprüche, mit
- Verbindungen zu einem Mobilfunk-Telekommunikationsnetz und zu einem Festnetz-Telekommunikationsnetz
- mit einer Detektionsvorrichtung zur Detektion des telekommunikationsnetzseitigen Aufwandes (6,40) bezüglich einer Telekommunikationsverbindung zwischen einem Mobilfunkteilnehmer (1) und einem Festnetzteilnehmer (7) zur Gebührenerfassung,
- wobei die Detektionsvorrichtung eine Teilnehmer-Detektionsvorrichtung zur Feststellung, ob ein Teilnehmer Mobilfunkteilnehmer (1) ist und ob der andere Teilnehmer Festnetzteilnehmer (7) ist, aufweist,
- wobei die Detektionsvorrichtung eine Positionerfassungseinrichtung zur Erfassung der aktuellen Position (2 oder 23 a) des Mobilfunkteilnehmers aufweist,
- wobei die Detektionsvorichtung eine Ortsbereichsdetektionseinrichtung aufweist, **dadurch gekennzeichnet, daß**
im Falle einer Telekommunikationsverbindung zwischen einem Mobilfünk-und einem Festnetzteilnehmer, dessen Festnetzanschluß aufgrund der Festnetzanschlußvorwahl innerhalb eines die Position (2 oder 23 a) des Mobilfunkteilnehmers (1) umgebenden, vorgebbaren Ortsbereichs (23 a) liegt, ein Ortsgespräch (40) detektiert wird, während im Falle einer Telekommunikationsverbindung (6) mit einem Festnetzteilnehmer (7), dessen Festnetzanschluß aufgrund der Festnetzanschluß-Vorwahl ("089") außerhalb des die Position (2 oder 23 a oder DS oder Funkzelle) des Mobilfunkteilnehmers (1) umgebenden, vorgebbaren Ortsbereich (23 a) liegt, ein verglichen zum Ortsgespräch teureres Ferngespräch detektiert wird.

20. Telekommunikationsnetz nach Anspruch 19,
**dadurch gekennzeichnet,**
**daß** eine Ansagevorrichtung zur Ansage von die Art des Gesprächs hinsichtlich Ferngespräch oder Ortsgespräch repräsentierenden Informationen vorgesehen ist.

21. Telekommunikationsnetz nach einem der Ansprüche 19 oder 20,
**dadurch gekennzeichnet,**
**daß** die Ortsbereichs-Detektionseinrichtung Zugriff auf eine Tabellen-Datei (Fig. 4) hat, in welcher zu Positionen repräsentierenden oder beinhaltenden Daten (23 bis 25) jeweils als Ortsbereich anwählbare Vorwahl-Nummern (27 bis 30) gespeichert sind.

22. Telekommunikationsnetz nach Anspruch 21,
**dadurch gekennzeichnet,**
**daß** die Positionen repräsentierenden Daten jeweils mindestens eine Basisstation oder mindestens eine Funkzelle eines Mobilfunknetzes repräsentieren.

## Claims

1. Method for detecting on the telecommunication network side the complexity on the telecommunication network side with respect to a desired or current telecommunication link (6) between two subscribers (1, 7) in order to determine the rate,
one subscriber being a mobile radio subscriber (1) with a mobile radio phone and the other subscriber being a fixed network subscriber (7) with a fixed network connection and the location (2; radio cell 23a) of the mobile radio subscriber (1) being detected,
**characterised in that**
in the case of a telecommunication link (40) of the mobile radio subscriber (1) to a fixed network subscriber (4), the fixed network connection of which lies within a local area (3), which surrounds the location (2; radio cell 23a) of the mobile radio subscriber (1) and is prescribable on the basis of the fixed network connection code, a local call is detected,
while, in the case of a telecommunication link (6) of the mobile radio subscriber (1) to a fixed network subscriber (7), the fixed network connection of which (4) lies outwith the local area, which surrounds the location (radio cell 23a) of the mobile radio subscriber (1) and is prescribable on the basis of the fixed network connection code, a long distance call is detected which is more expensive in comparison to the local call.

2. Method according to claim 1,
**characterised in that**
the mobile radio subscriber (1) is the caller and the fixed network subscriber is the called subscriber.

3. Method according to one of the preceding claims,
**characterised in that**,
in the case of detection of a long distance call (6) and/or in the case of detection of a local call (40), the caller (1) is informed of this.

4. Method according to claim 3,
**characterised in that**
the caller is switched for his information to a language announcing system which announces information representing the type of call (long distance call/local call) in language form.

5. Method according to claim 3 or 4,
**characterised in that**,
for information, information representing the type of call is transmitted from a brief news system (Fig. 2, 15), as a brief announcement or unstructured supplementary service data USSD, to the caller (1).

6. Method according to one of the preceding claims,
**characterised in that**
detection takes place as to whether the fixed network code (5 = "0211") with respect to the detected current location (23a) of the mobile radio subscriber (1) is situated in the local call area (3) or in the long distance call area (10) on the basis of a list of mobile radio subscriber location areas (23a, 24, 25) and assigned fixed network codes (27, 28, 29, 30; 30; -).

7. Method according to claim 6,
**characterised in that**
the mobile radio subscriber location areas (23a to 25) in the list (Fig. 4) are stored thereby in the form of mobile radio network elements, which respectively cover one mobile radio subscriber location area, especially mobile radio base stations or radio cells (23a to 25).

8. Method according to one of the claims 6 or 7,
**characterised in that**
the mobile radio subscriber location areas (23a, 24, 25) are formed on the basis of polygonal areas, the individual polygon sides being formed respectively at least approximately by the mid-perpendicular of the connection line respectively of the base station of the radio cell and of spatially adjacent base stations.

9. Method according to claim 8,
**characterised in that**
the polygon sides are displaced relative to the mid-perpendiculars on the basis of the main beam direction of the transmitter of the polygon radio cell.

10. Method according to one of the claims 6 to 9,
**characterised in that**,
in the list, the local area codes belonging to one base station or its polygonal area or radio cell are defined on the basis of their code numbers (27; 0211).

11. Method according to one of the claims 6 to 10,
**characterised in that**
only those codes are taken into account for a possible mobile telephone location area (23a, 24, 25) in the coverage area of which adequate population occurs.

12. Method according to one of the preceding claims,
**characterised in that**
one code area respectively (Fig. 6/VW1; VW3; VW4; VW7 for G1) is defined as contained in the local area (74, 75 and 76) around the current position (in 61) of the mobile radio subscriber (90) if this code area (VW1, 3, 4, 7, 65-73) is in a locality (G1-G3, 62-64), into which locality a transmission is made receivably at least in partial regions from the radio cell (61) used by the mobile radio subscriber (90).

13. Method according to claim 12,
**characterised in that**
a code area is defined as belonging to the local area only when the area of the code area overlapping with a locality, into which the radio cell used by the mobile radio subscriber transmits, lies above a threshold value.

14. Method according to one of the claims 12 or 13,
**characterised in that**
a code area is defined as belonging to the local area only if the portion of the populated area elements of the code area (VW1) is above a prescribable threshold value.

15. Method according to one of the preceding claims,
**characterised in that**,
across one radio cell respectively, the radio cell area into which this radio cell transmits receivably, is determined approximately by determining the base station area in the form of the Voronoi surface of the base station assigned to this radio cell and by division of the base station area into radio cells of this base station via the angle bisecting lines of the main beam directions of the radio cells of this base station.

16. Method according to claim 15,
**characterised in that**
the area boundaries between adjacent radio cells are defined respectively as the centre of their main beam direction angle bisecting lines.

17. Method according to one of the preceding claims,
**characterised in that**,
for each code area (VW1 to VW9), to which a mobile radio subscriber (90; 1) can phone at the local tariff, all populated area elements of all localities which can be reached by this code are added and the codes are transmitted to the terminal (90) of a mobile radio telecommunication subscriber (1), sorted according to the sum of their populated pixels, in order to be presented there (91) in this sequence.

18. Method according to one of the preceding claims,
**characterised in that**
information is transmitted to all subscribers within at least one radio cell, by means of a cell broadcast or another broadcast message, concerning on which codes local calls are possible.

19. Telecommunication network for implementing the method according to one of the preceding claims,
with
• links to a mobile radio telecommunication network and to a fixed telecommunication network,
• having a detection device for detecting the complexity (6, 40) on the telecommunication network side with respect to a telecommunication link between a mobile radio subscriber (1) and a fixed network subscriber (7) in order to determine the rate,
• the detection device having a subscriber detection device for establishing whether a subscriber is a mobile radio subscriber (1) and whether the other subscriber is a fixed network subscriber (7),
• the detection device has a position determining device for detecting the current position (2 or 23a) of the mobile radio subscriber,
• the detection device has a local area detection device,
**characterised in that**
in the case of telecommunication link (40) between a mobile radio subscriber and a fixed network subscriber, the fixed network connection of which lies within a local area (23a), which surrounds the location (2 or 23a) of the mobile radio subscriber (1) and is prescribable on the basis of the fixed network connection code, a local call is detected,
while, in the case of a telecommunication link (6) to a fixed network subscriber (7), the fixed network connection of which lies outwith the local area (23a), which surrounds the location (2 or 23a or DS or radio cell) of the mobile radio subscriber (1) and is prescribable on the basis of the fixed network connection code ("089"), a long distance call is detected which is more expensive in comparison to the local call.

20. Telecommunication network according to claim 19,
**characterised in that**
an announcing device for announcing information representing the type of call with respect to a long-distance call or a local call is provided.

21. Telecommunication network according to one of the claims 19 or 20,
**characterised in that**
the local area detection device has access to a list file (Fig. 4) in which data (23 to 25) representing or containing the locations are stored respectively as code numbers (27 to 30) which can be dialled as local area.

22. Telecommunication network according to claim 21,
**characterised in that**
the data representing the locations represent respectively at least one base station or at least one radio cell of a mobile radio network.

## Revendications

1. Procédé pour déterminer, du côté du réseau de télécommunication, le coût, du côté du réseau de télécommunication, relativement à une liaison de télécommunication souhaitée ou existante (6) entre deux abonnés (1, 7) pour le calcul de la taxation,
un abonné étant un abonné de radiotéléphonie mobile (1) ayant un radiotéléphone mobile et l'autre abonné étant un abonné de réseau fixe (7) ayant un raccordement à un réseau fixe, et
la position (2 ; cellule radio 23a) de l'abonné de radiotéléphonie mobile (1) étant détectée,
**caractérisé en ce que**, dans le cas d'une liaison de télécommunication (40) de l'abonné de radiotéléphonie mobile (1) avec un abonné de réseau fixe (4), dont le raccordement de réseau fixe, en raison de la présélection du raccordement de réseau fixe, se trouve à l'intérieur d'une zone locale (3) pouvant être prédéfinie, entourant la position (2 ; cellule radio 23a) de l'abonné de radiotéléphonie mobile (1), il est détecté une communication locale, tandis que, dans le cas d'une liaison de télécommunication (6) de l'abonné de radiotéléphonie mobile (1) avec un abonné de réseau fixe (7), dont le raccordement de réseau fixe, en raison de sa présélection de raccordement de réseau fixe, se trouve à l'extérieur de la zone locale pouvant être prédéfinie, entourant la position (cellule radio 23a) de l'abonné de radiotéléphonie mobile (1), il est détecté une communication à distance plus coûteuse comparée à la communication locale.

2. Procédé selon la revendication 1,
**caractérisé en ce que** l'abonné de radiotéléphonie mobile (1) est l'appelant et l'abonné de réseau fixe est l'appelé.

3. Procédé selon une des revendications précédentes,
**caractérisé en ce que**, dans le cas de la détection d'une communication à distance (6) et/ou dans le cas de la détection d'une communication locale (40), l'appelant (1) en est informé.

4. Procédé selon la revendication 3,
**caractérisé en ce que** l'appelant reçoit ses informations d'un système d'annonce vocal, lequel annonce sous forme vocale des informations représentant le type de la communication (communication à distance/communication locale).

5. Procédé selon la revendication 3 ou 4,
**caractérisé en ce que**, pour l'information par un système à messages courts (figure 2, 15), des informations représentant le type de la communication sont émises à l'appelant (1) comme message court ou USSD ("Unstructured Supplementary Service Data").

6. Procédé selon une des revendications précédentes,
**caractérisé en ce que** la détermination du fait que la présélection du réseau fixe (5 = "0211") relativement à la position actuelle détectée (23a) de l'abonné de radiotéléphonie mobile (1) se trouve dans la zone de communication locale (3) ou dans la zone de communication à distance (10), est effectuée sur la base d'un tableau de zones de position de l'abonné de radiotéléphonie mobile (23a, 24, 25) et de présélections de réseau fixe associées (27, 28, 29, 30 ; 30 ; -).

7. Procédé selon la revendication 6,
**caractérisé en ce que**, de plus, les zones de position de l'abonné de radiotéléphonie mobile (23a à 25) sont indiquées dans le tableau (figure 4) sous forme, à chaque fois, d'éléments de réseau de radiotéléphonie mobile recouvrant une zone de position de l'abonné de radiotéléphonie mobile, en particulier des postes de base de radiotéléphonie mobile ou des cellules radio (23a à 25).

8. Procédé selon une des revendications 6 ou 7,
**caractérisé en ce que** les zones de position de l'abonné de radiotéléphonie mobile (23a, 24, 25) sont formées sur la base de surfaces polygonales, au moins approximativement les côtés de polygone individuels étant formés, à chaque fois, par les médiatrices des lignes de liaison à chaque fois du poste de base de la cellule radio et de postes de base spatialement voisins.

9. Procédé selon la revendication 8,
**caractérisé en ce que** les côtés de polygone sont décalés par rapport aux médiatrices sur la base de la direction de rayonnement principale de l'émetteur de la cellule radio polygonale.

10. Procédé selon une des revendications 6 à 9,
**caractérisé en ce que**, dans le tableau, sont définies les présélections des zones locales appartenant à un poste de base ou à sa surface polygonale ou cellule radio sur la base de leurs chiffres de présélection (27 ; 0211).

11. Procédé selon une des revendications 6 à 10,
**caractérisé en ce que**, pour une zone de position de téléphone mobile possible (23a, 24, 25), on prend uniquement en compte les présélections dans la zone de recouvrement desquelles il existe un peuplement suffisant.

12. Procédé selon une des revendications précédentes,
**caractérisé en ce que**, à chaque fois, une zone de présélection (figures 6/VW1 ; VW3 ; VW4 ; VW7 pour G1) est définie comme contenue dans la zone locale (74, 75 et 76) autour de la position actuelle (en 61) de l'abonné de radiotéléphonie mobile (90) dans le cas où cette zone de présélection (VW1, 3, 4, 7, 65 - 73) se trouve dans une région (G1 - G3, 62 - 64), dans laquelle, au moins sur une zone partielle, on émet de façon réceptible à partir de la cellule radio (61) utilisée par l'abonné de radiotéléphonie mobile (90).

13. Procédé selon la revendication 12,
**caractérisé en ce qu'**une zone de présélection est définie comme appartenant à la zone locale uniquement lorsque la surface d'intersection de la zone de présélection avec une région dans laquelle la cellule radio utilisée par l'abonné de radiotéléphonie mobile émet, se trouve au-dessus d'une valeur de seuil.

14. Procédé selon une des revendications 12 ou 13,
**caractérisé en ce qu'**un domaine de présélection est défini comme appartenant à la zone locale uniquement dans le cas où la portion des éléments de surface peuplés du domaine de présélection (VW1) se trouve au-dessus d'une valeur de seuil pouvant être prédéfinie.

15. Procédé selon une des revendications précédentes,
**caractérisé en ce que**, sur une cellule radio, à chaque fois la surface de cellule radio dans laquelle cette cellule radio émet de façon réceptible, est calculée approximativement par détermination de la surface du poste de base sous forme de la surface de Voronoi du poste de base associé à cette cellule radio et de la répartition de la surface du poste de base sur les cellules radio de ce poste de base par les bissectrices des directions de rayonnement principales des cellules radio de ce poste de base.

16. Procédé selon la revendication 15,
**caractérisé en ce que** les limites de surface entre des cellules radio voisines sont définies à chaque fois comme centre de leurs bissectrices des directions de rayonnement principales.

17. Procédé selon une des revendications précédentes,
**caractérisé en ce que**, pour chaque zone de présélection (VW1 à VW9), vers laquelle un abonné de radiotéléphonie mobile (90 ; 1) peut téléphoner au tarif local, tous les éléments de surface peuplés de toutes les régions pouvant être atteintes par cette présélection sont additionnés et les présélections après triage de la somme de leurs éléments peuplés sont envoyées au terminal (90) d'un abonné de télécommunication par radiotéléphonie mobile (1) pour la représentation en ce lieu (91) dans cette succession.

18. Procédé selon une des revendications précédentes,
**caractérisé en ce que**, à tous les abonnés à l'intérieur d'au moins une cellule radio, il est envoyé, au moyen de "Cell-Broadcast" ou d'un message à diffusion générale quelconque, des informations concernant les présélections pour lesquelles des communications locales sont possibles.

19. Réseau de télécommunication pour mettre en oeuvre le procédé selon une des revendications précédentes, comportant :
- des liaisons vers un réseau de télécommunication à radiotéléphonie mobile et vers un réseau de télécommunication à réseau fixe,
- un dispositif de détermination pour déterminer le coût (6, 40), du côté du réseau de télécommunication, relativement à une liaison de télécommunication entre un abonné de radiotéléphonie mobile (1) et un abonné de réseau fixe (7) pour le calcul de la taxation,
- le dispositif de détermination présentant un dispositif de détermination d'abonné pour déterminer si un abonné est un abonné de radiotéléphonie mobile (1) et si l'autre abonné est un abonné de réseau fixe (7),
- le dispositif de détermination présentant un dispositif de détection de position pour détecter la position actuelle (2 ou 23a) de l'abonné de radiotéléphonie mobile,
- le dispositif de détermination présentant un dispositif de détermination de zones locales,
**caractérisé en ce que**, dans le cas d'une liaison de télécommunication entre un abonné de radiotéléphonie mobile et un abonné de réseau fixe, dont le raccordement de réseau fixe, sur la base de la présélection du raccordement du réseau fixe, se trouve à l'intérieur d'une zone locale (23a) pouvant être prédéfinie, entourant la position (2 ou 23a) de l'abonné (1) de radiotéléphonie mobile, une communication locale (40) est détectée, tandis que, dans le cas d'une liaison de télécommunication (6) avec un abonné de réseau fixe (7), dont le raccordement de réseau fixe se trouve, en raison de la présélection du raccordement de réseau fixe ("089"), à l'extérieur de la zone locale (23a) pouvant être prédéfinie, entourant la position (2 ou 23a ou DS ou cellule radio) de l'abonné (1) de radiotéléphonie mobile, il est détecté une communication à distance plus coûteuse comparée à la communication locale.

20. Réseau de télécommunication selon la revendication 19,
**caractérisé en ce qu'**un dispositif d'annonce pour l'annonce d'informations représentant le type de communication relativement à une communication à distance ou à une communication locale est prévu.

21. Réseau de télécommunication selon une des revendications 19 ou 20,
**caractérisé en ce que** le dispositif de détermination de zones locales a accès à un fichier tabellaire (figure 4), dans lequel sont mémorisées des données contenant ou représentant des positions (23 à 25) à chaque fois comme numéros de présélection (27 à 30) pouvant être choisis comme zone locale.

22. Réseau de télécommunication selon la revendication 21,
**caractérisé en ce que** les données représentant des positions représentent, à chaque fois, au moins un poste de base ou au moins une cellule radio d'un réseau de radiotéléphonie mobile.
